# DEMANDE DE BREVET EUROPEEN

(11) **EP 0 719 974 A1**
(43) Date de publication de la demande: **03.07.1996**
(21) Numéro de dépôt: 95402942.7
(22) Date de dépôt: 26.12.1995
(51) Int. Cl.: F16L 47/04, F16L 47/00

(54) **Raccord de sécurité pour fluide combustible**

(30) Priorité: 28.12.1994 FR 9415770
(71) Demandeur: BANIDES ET DEBEAURAIN, F-76470 Le Treport (FR)
(72) Inventeur: Hatton, Yves, F-76270 Eu (FR); Mangon, Didier, f-80230 Saint Valery-sur-Somme (FR)
(74) Mandataire: Laget, Jean-Loup

(57) **Abrégé**

Un dispositif formant raccord de sécurité pour fluide combustible comporte un anneau biconique 5, une douille 2 avec un taraudage intérieur 3 et une conformation intérieur 4 apte à sertir ledit anneau biconique 5 sur un tuyau 1. Une bague 7 avec un filetage extérieur coopérant avec ledit taraudage intérieur 3 et une conformation 6 apte à sertir ledit anneau biconique 5 sur le tuyau 1 comporte un écrou séparable 7a après assemblage du raccord sur dépassement d'un couple de serrage prédéterminé.

Application au transport de fluide combustible.

## Description

L'invention est relative à un dispositif formant raccord de sécurité pour fluide combustible.

On connaît de nombreux dispositifs de raccordement de conduite de circulation de fluide, notamment des raccords dénommés "raccords à olive" par les spécialistes.

Les raccords à olive sont utilisés généralement pour le raccordement d'une tuyauterie métallique de transport de fluide à un dispositif particulier ou à une autre tuyauterie. Ces raccords comportent un anneau biconique dont le diamètre intérieur permet le montage à coulissement doux sur la tuyauterie à raccorder, une douille comportant un taraudage intérieur et une conformation intérieure apte à sertir ledit anneau biconique sur la tuyauterie et une bague avec un filetage extérieur coopérant avec ledit taraudage intérieur de la douille et une conformation apte à sertir ledit anneau biconique sur ladite tuyauterie.

Pour monter les raccords à olive, on enfile tout d'abord la bague filetée extérieurement sur la tuyauterie à raccorder, puis on enfile l'anneau biconique sur la tuyauterie à raccorder, après quoi on introduit la tuyauterie dans la douille taraudée intérieurement et jusqu'à venir en butée à l'intérieur de celle-ci, on assemble par vissage la bague filetée extérieurement avec la douille taraudée intérieurement. Le vissage de la bague et de la douille produit un rapprochement de deux conformations coopérantes situées de part et d'autre de l'anneau biconique et écrase celui-ci en le sertissant définitivement sur la tuyauterie à raccorder. Grâce au sertissage obtenu par effet de coin, on obtient ainsi un assemblage permanent assurant à la fois une tenue mécanique à l'arrachement élevée et une étanchéité parfaite du raccordement.

Cette technologie connue notamment pour le raccordement de conduites d'alimentation en eau, est avantageuse en ce qu'elle peut être utilisée par un personnel peu qualifié muni d'un outillage simple, et en ce qu'elle ne présente pas de risque lié à l'emploi d'une flamme ou de la chaleur.

Cependant, la démontabilité du raccordement ainsi constitué qui constitue un avantage dans le cas des alimentations en eau devient un inconvénient lorsque l'on envisage l'application de ce type de raccordement au transport de fluides dangereux du genre combustible gazeux (gaz naturel, propane, butane,...) ou inflammable.

L'invention a pour but de remédier à cet inconvénient en proposant un nouveau type de raccord de sécurité pour fluide combustible indémontable après mise en place et sertissage de l'anneau biconique sur la tuyauterie.

L'invention a pour objet un dispositif formant raccord de sécurité pour fluide combustible, du type comportant un anneau biconique, une douille avec un taraudage intérieur et une conformation intérieure apte à sertir ledit anneau biconique sur un tuyau, une bague avec un filetage extérieur coopérant avec ledit taraudage intérieur et une conformation apte à sertir ledit anneau biconique sur ledit tuyau, caractérisé en ce que ladite bague comporte un écrou séparable après assemblage du raccord sur dépassement d'un couple de serrage prédéterminé.

Selon d'autres caractéristiques de l'invention :
- la bague comporte un corps relié audit écrou séparable par au moins deux secteurs annulaires aptes à être cisaillés sur dépassement d'un couple de serrage prédéterminé ;
- ledit écrou séparable entoure le tuyau avant serrage et comporte au moins deux pièces distinctes et séparées se détachant toutes du corps lors de la séparation de l'écrou, de manière à libérer entièrement le tuyau après détachement de l'écrou ;
- ledit écrou séparable comporte deux pièces symétriques par rapport à un plan diamétral défini par une fente de séparation ;
- les deux secteurs annulaires sont disposés radialement intérieurement, de manière à coulisser sur le tuyau lors du montage du raccord ;
- les deux secteurs annulaires sont constitués par usinage d'une gorge annulaire et sciage partiel de cette gorge pour constituer des espaces libres aux extrémités des secteurs annulaires.

L'invention sera mieux comprise grâce à la description qui va suivre donnée à titre d'exemple non limitatif en référence aux dessins annexés dans lesquels :

Les figures 1A et 1B représentent deux vues en coupe diamétrale longitudinale d'un dispositif selon l'invention, respectivement avant assemblage et après assemblage définitif sur une tuyauterie.

Les figures 2A et 2B représentent schématiquement des vues en coupe diamétrale et longitudinale d'un autre dispositif selon l'invention, respectivement avant et après assemblage définitif de deux tuyauteries.

La figure 3 représente une vue de dessus dans le sens des flèches III des figures 4 et 5 d'une bague filetée extérieurement d'un dispositif selon l'invention.

La figure 4 représente une vue en coupe selon la ligne IV-IV de la figure 5 d'une bague filetée extérieurement d'un dispositif selon l'invention.

La figure 5 représente une vue de face dans le sens des flèches V des figures 3 et 4 d'une bague filetée extérieurement d'un dispositif selon l'invention.

La figure 6 représente une vue en perspective d'une bague filetée extérieurement d'un dispositif selon l'invention comportant une moitié d'écrou séparable.

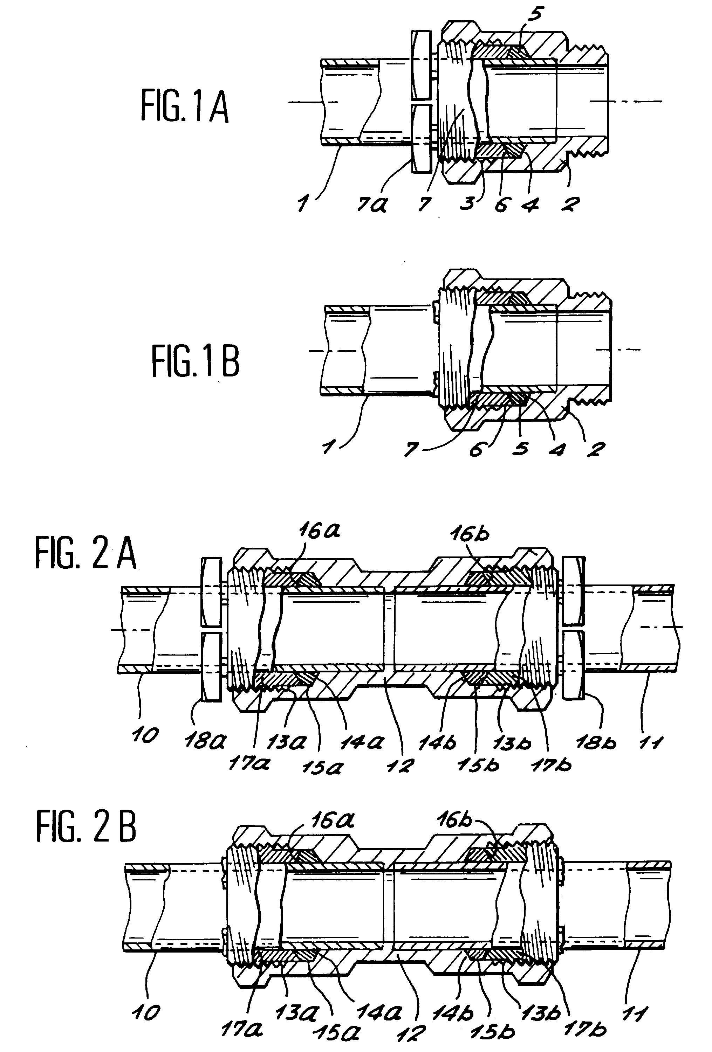

En référence aux figures 1A et 1B, dans lesquelles les chiffres des références identiques désignent des éléments identiques ou fonctionnellement équivalents, un dispositif selon l'invention est représenté en position de montage sur une tuyauterie 1. La tuyauterie est engagée dans une douille 2 comportant un taraudage intérieur 3 et une conformation intérieure 4. La conformation intérieure 4 de la douille 2 est en contact avec un anneau biconique 5 qui se trouve également en contact avec une conformation 6 d'une bague 7 filetée extérieurement de manière à coopérer avec le taraudage 3 de la douille 2. La bague 7 comporte un écrou 7a séparable permettant le vissage à la main de la douille 2 avec la bague 7 dans la position représentée à la figure 1A.

Après avoir effectué le montage à la main, on applique au moyen d'une clef appropriée un couple de serrage prédéterminé sur l'écrou 7a qui se sépare de la bague 7 après que l'anneau biconique 5 soit serti soir la tuyauterie 1 sous l'action des deux conformations 4 et 6 se rapprochant l'une de l'autre et coopérant pour former un coin forçant l'anneau biconique 5 à se sertir sur la tuyauterie 1 . Après montage définitif et séparation de l'écrou 7a, on constate qu'il est impossible de dévisser la bague filetée 7 qui ne présente plus aucune extrémité accessible extérieure à la douille 2.

En référence aux figures 2A et 2B, un autre dispositif selon l'invention destiné à raccorder deux canalisations 10 et 11 l'une à l'autre comporte une douille double 12 comportant deux taraudages 13A et 13b et deux conformations inclinées 14a et 14b coopérant respectivement avec les anneaux biconiques 15a et 15b. Chaque anneau biconique 15a et 15b coopère également avec une conformation correspondante 16a et 16b d'une bague filetée extérieurement 17a ou 17b. Le filetage de la bague 17a correspond au vissage avec le taraudage 13a, tandis que le filetage de la bague 17b correspond au vissage avec le taraudage 13b.

Chaque bague filetée 17a ou 17b comporte un écrou 18a ou 18b séparable après assemblage du raccord sur dépassement d'un couple de serrage prédéterminé. Ainsi, après avoir monté les deux tuyauteries 10 et 11 dans la position de la figure 2A, on serre le dispositif au moyen d'une clef appliquée aux écrous 18a et 18b le dispositif, ce qui provoque le sertissage des anneaux biconiques 15a et 15b sur les tuyauteries 10 et 11 et produit la séparation des écrous 18a et 18b. Comme on le constate sur la figure 2B, le démontage du dispositif totalement vissé est ensuite impossible sans destruction des tuyauteries ou des éléments constituant le dispositif.

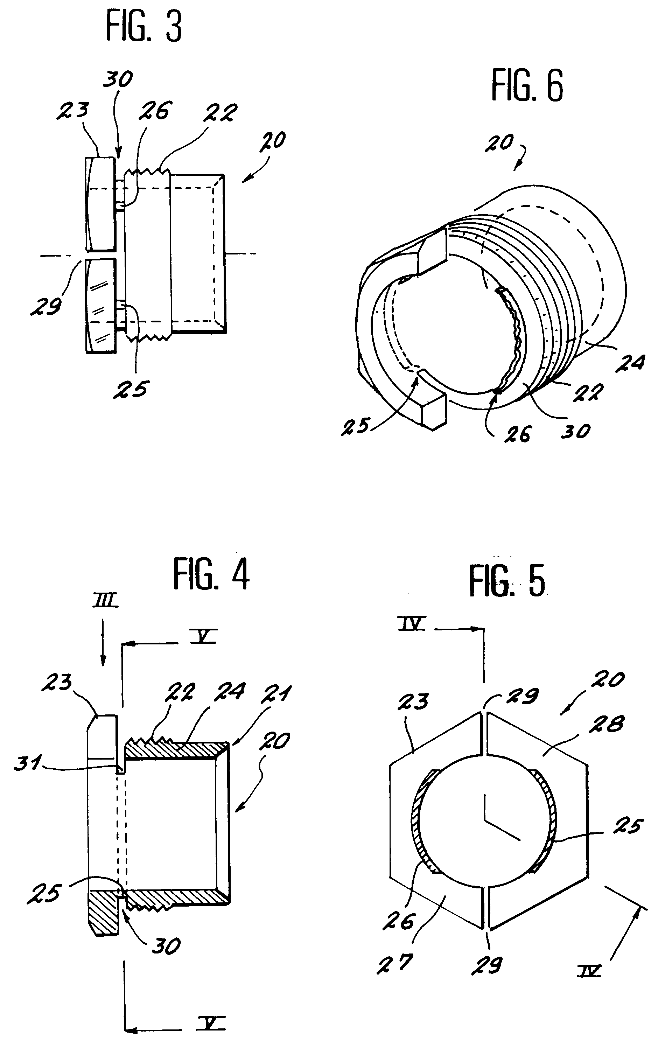

En référence aux figures 3 à 6 dans lesquelles les éléments de repère identiques sont identiques ou fonctionnellement équivalents, une bague filetée extérieurement 20 comporte une conformation d'extrémité 21 produisant un effet de coin sur un anneau biconique non représenté, un filetage extérieur 22 apte à coopérer avec un taraudage correspondant, et un écrou 23 séparable sur dépassement d'un couple de serrage prédéterminé. La bague 20 comporte un corps 24 de forme tubulaire sur lequel sont usinés le filetage 22 et la conformation 21. Le corps 24 est relié à l'écrou séparable 23 par deux secteurs annulaires 25 et 26 d'épaisseur faible. Les secteurs annulaires 25 et 26 sont prédéterminés de manière à être cisaillés dès que l'on dépasse un couple de serrage prédéterminé, le cisaillement des secteurs 25 et 26 provoquant alors la séparation de l'écrou 23.

Dans la position normale d'utilisation, l'écrou séparable 23 entoure la tuyauterie à raccorder avant serrage ; de manière à assurer la séparation totale de l'écrou 23 après serrage, on prévoit de réaliser l'écrou 23 en au moins deux pièces distinctes 27 et 28 séparées se détachant du corps lors de la séparation de l'écrou, de manière à libérer entièrement la tuyauterie à raccorder de toute pièce déplaçable sur celle-ci.

A cet effet, les deux pièces 27 et 28 sont avantageusement réalisées en pratiquant une fente de séparation 29 selon un plan diamétral de symétrie : ainsi, aprés rupture des secteurs annulaires 25 et 26, les deux pièces 27 et 28 ne sont retenues par aucun diamétre et tombent sous l'effet de leur propre poids en se détachant de la tuyauterie.

Dans le cas d'une bague filetée 20 réalisée en matériau métallique, on constitue de préférence les deux secteurs annulaires 25 et 26 en usinant une gorge annulaire 30 entre l'écrou 23 et le corps 24 de la bague filetée 20, puis en sciant partiellement selon 31 la gorge annulaire 30 pour constituer des espaces libres aux extrémités des secteurs annulaires 25 et 26.

L'invention décrite en référence à des modes de réalisation particuliers n'y est nullement limitée, mais couvre au contraire toutes modifications de forme et toutes variantes de réalisation dans le cadre et dans l'esprit de l'invention : ainsi, les montages des figures 1A, 1B, 2a et 2B seront aisément étendus par l'homme du métier au montage d'un nombre quelconque de canalisations sur un bloc formant douille multiple apte à recevoir un nombre prédéterminé de tuyauteries à raccorder.

## Revendications

1. Dispositif formant raccord de sécurité pour fluide combustible, du type comportant un anneau (5, 15a, 15b) biconique, une douille (2, 12a, 12b) avec un taraudage intérieur (3, 13a, 13b) et une conformation intérieur (4, 14a, 14b) apte à sertir ledit anneau biconique (5, 15a, 15b) sur un tuyau (1, 10, 11), une bague (7, 17a, 17b, 20) avec ion filetage extérieur (22) coopérant avec ledit taraudage intérieur (3, 13a, 13b) et une conformation (6, 16a, 16b, 21) apte à sertir ledit anneau biconique (5, 15a, 15b) sur ledit tuyau (1, 10, 11), caractérisé en ce que ladite bague (7, 17a, 17b, 20) comporte un écrou (7a, 18a, 18b, 23) séparable après assemblage du raccord sur dépassement d'un couple de serrage prédéterminé.

2. Dispositif selon la revendication 1, caractérisé en ce que la bague (20) comporte un corps (24) relié audit écrou (23) séparable par au moins deux secteurs (25, 26) annulaires aptes à être cisaillés sur dépassement, d'un couple de serrage prédéterminé.

3. Dispositif selon la revendication 2, caractérisé en ce que ledit écrou (23) séparable entoure le tuyau avant serrage et comporte au moins deux pièces (27, 28) distinctes et séparées se détachant toutes du corps (24) lors de la séparation de l'écrou, de manière à libérer entièrement le tuyau après détachement de l'écrou ;

4. Dispositif selon la revendication 3, caractérisé en ce que ledit écrou séparable (23) comporte deux pièces symétriques (27, 28) par rapport à un plan diamétral défini par une fente (29) de séparation ;

5. Dispositif selon la revendication 2, caractérisé en ce que les deux secteurs annulaires (25, 26) sont disposés radialement intérieurement, de manière à coulisser sur le tuyau lors du montage du raccord ;

6. Dispositif selon la revendication 5, caractérisé en ce que les deux secteurs annulaires (25, 26) sont constitués par usinage d'une gorge annulaire (30) et sciage partiel de cette gorge (30) pour constituer des espaces libres aux extrémités des secteurs annulaires (25, 26).
